# EUROPEAN PATENT APPLICATION

(11) **EP 2 937 229 A1**
(43) Date of publication of application: **28.10.2015**
(21) Application number: 13866180.6
(22) Date of filing: 03.12.2013
(51) Int. Cl.: B60C 5/00, B29D 30/06

(54) **PNEUMATIC TIRE, AND METHOD OF MANUFACTURING PNEUMATIC TIRE**

(30) Priority: 19.12.2012 JP 2012277426
(71) Applicant: Bridgestone Corporation, Tokyo 104-8340 (JP)
(72) Inventor: WATANABE, Toshiyuki, Kodaira-shi Tokyo 187-8531 (JP); WAKI, Yoshiyuki, Kodaira-shi Tokyo 187-8531 (JP); ISHIHARA, Taiga, Kodaira-shi Tokyo 187-8531 (JP); YOKOTA, Hidetoshi, Kodaira-shi Tokyo 187-8531 (JP); ISHIKAWA, Seiji, Kodaira-shi Tokyo 187-8531 (JP); MATSUNAGA, Ietomo, Kodaira-shi Tokyo 187-8531 (JP); KUSANO, Akio, Kodaira-shi Tokyo 187-8531 (JP); TAKADA,Hiroshi, Kodaira-shi Tokyo 187-8531 (JP); MIYOSHI, Akane, Kodaira-shi Tokyo 187-8531 (JP)
(74) Representative: Oxley, Robin John George
(86) International application number: PCT/JP2013/007091
(87) International publication number: WO 2014/097557

(57) **Abstract**

A pneumatic tire (1) has a carcass (9) toroidally extending from a tread portion (7) along a pair of sidewall portions (5) to a pair of bead portions (3), and bead fillers (13) provided radially outwardly of bead cores (11) embedded in the bead portions (3), including flocking areas (21) in which many short fibers (17) are fixed to at least part of an inner surface (15) of the pneumatic tire (1) with an adhesive. The flocking areas (21) are positioned such that their tire radial direction inner ends (21a) are positioned inwardly in the tire radial direction as compared to the tire radial direction outer ends (13a) of the bead fillers (13) and are spaced a given distance outward in the tire radial direction apart from bead toes (23).

## Description

### TECHNICAL FIELD

This disclosure relates to a pneumatic tire and a method of producing the same.

### BACKGROUND

Pneumatic tires are known to cause cavity resonance related to the length of the circular tube inside the tire. The cavity resonance is one of the causes of unpleasant vehicle interior noise. In order to lower such cavity resonance, techniques for fixing many short fibers to the inner surface of a tire with an adhesive have been proposed (see JP 2004-082387 A (Patent Literature 1), for example).

### CITATION LIST

### Patent Literature

PTL 1: JP 2004-082387 A

### SUMMARY

However, for such a tire having many short fibers being fixed to its inner surface with an adhesive as described above, during use, there have been cases where the short fibers partially peel off to consequently affect the sound absorption performance.

Therefore, it could be helpful to provide a pneumatic tire with short fibers fixed to the inner surface of the tire with improved peel resistance, and a method of producing such a pneumatic tire.

The disclosure is provided to solve the above problem, and our pneumatic tire has flocking areas in which many short fibers are fixed to at least part of the inner surface of the pneumatic tire with an adhesive. The flocking areas are positioned such that their tire radial direction inner ends are on the inner side in the tire radial direction than the tire radial direction outer ends of the bead fillers and are spaced a given distance outward in the tire radial direction apart from bead toes. Note that the dimensions and the like defined in this disclosure are measured in a no-load state where a pneumatic tire mounted on an approved rim is inflated to a predetermined pressure without load application. The "approved rim" refers to a rim defined by the following standards with respect to the size of each tire, for example, "Standard Rim" of JATMA, "Design Rim" of TRA, or "Measuring Rim" of ETRTO. The aforementioned "predetermined pressure" refers to a pressure described in the following standards, which is the air pressure (maximum air pressure) corresponding to the "maximum load capacity" of a single tire having an applicable size, for example, a maximum air pressure of JATMA, a maximum value specified in the table "TIRE LOAD LIMITS AT VARIOUS COLD INFLATION PRESSURES" of TRA, or "INFLATION PRESSURE" of ETRTO.

### (Advantageous Effect of Invention)

It is possible to provide a pneumatic tire with short fibers fixed to the inner surface of the tire with improved peel resistance, and a method of producing such a pneumatic tire.

### BRIEF DESCRIPTION OF THE DRAWINGS

In the accompanying drawings,
FIG. 1 is a widthwise-sectional view of a pneumatic tire according to an embodiment;
FIG. 2 is a diagram showing the frequency spectra of the vehicle interior sound of automobiles driving with the respective tires of an example and comparative examples; and
FIG. 3 is a widthwise-sectional view of a pneumatic tire according to another embodiment.

### DETAILED DESCRIPTION

Embodiments will now be illustrated with reference to the drawings. It should be noted that the structure of the parts of a tire is not limited to the following description.

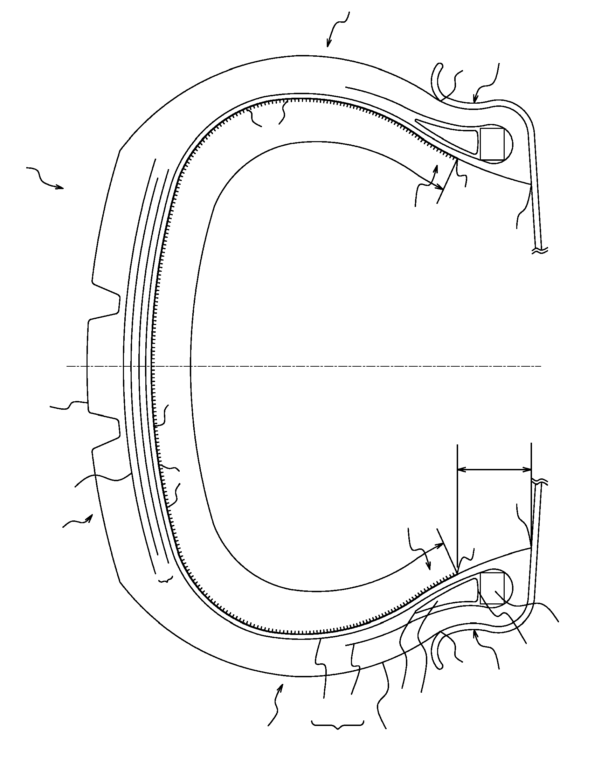

FIG. 1 shows the pneumatic tire (hereinafter also referred to simply as "tire") 1 in a no-load state where the tire mounted on an approved rim R is inflated to a predetermined pressure without load application. As shown in the figure, the tire 1 includes a pair of left and right bead portions 3, a pair of left and right sidewall portions 5, and a tread portion 7 continuously extending between the sidewall portions 5, 5, which forms a contact patch 7a. A carcass 9 formed from one or more carcass plies includes a main body portion 9a toroidally extending from the tread portion 7 to the bead cores 11 embedded in the pair of the bead portions 3 along the pair of the sidewall portions 5, and turn-up portions 9b continuously lead from the main body portion 9a and turned up around the bead cores 11 to extend outward in the tire radial direction. A belt 12 including a plurality of belt layers 12a are provided on the tire radial direction outer side of a crown region of the carcass 9. The bead fillers 13 are provided on the tire radial direction outer side of the bead cores 11 between the main body portion 9a and the turn-up portions 9b of the carcass.

Many short fibers 17 are fixed to the inner surface 15 of the tire 1, for example, with a urethane-based adhesive, to form flocking area(s) 21. The short fibers 17 can reduce cavity resonance caused by the tire 1. The tire radial direction inner ends 21a of the flocking areas 21 are located inwardly in the tire radial direction as compared to the tire radial direction outer ends 13a of the bead fillers 13, and are spaced a given distance h outward in the tire radial direction from bead toes 23. In this example, h is 10 mm. Further, in this example, the tire radial direction inner ends 21 a of the flocking areas 21 are located inwardly in the tire radial direction as compared to separating points d of the outer surface 16 of the pneumatic tire 1 from the approved rims R. Note that commercially available adhesives or pressure sensitive adhesives may be used as the adhesive, as well as urethane-based adhesives. The inner surface 15 of the tire 1 is generally made from an inner liner rubber; alternatively, at least a part of the inner surface can be formed from another material.

Mounting of a tire on a rim R and removal of the tire from the rim R may be repeated a plurality of times during use. On this occasion, if the flocking areas 21 are on the tire inner surface in the vicinity of the bead toes 23, the short fibers 17 fixed to the inner surface 15 of the tire 1 would partially peel off due to the interference with tire mounting/demounting tools, for example, a lever and the like. This may lead to loss of sound absorption performance. Further, the short fibers 17 fixed in the vicinity of the bead toes 23 would be caught between the rims R and the tire surface contacting the rims R to peel off. Therefore, as with the tire 1 of this embodiment, the flocking areas 21 are formed to be spaced a given distance h apart from the bead toes 23 outward in the tire radial direction, so that peeling of the short fibers 17 can be prevented. For the same reason, the given distance h is preferably 10 mm or more. Further, for the same reason, the given distance h is preferably larger than the distance in the tire radial direction from the tire radial direction inner ends 13b of the bead fillers 13 to the bead toes 23. In other words, when the tire radial direction inner ends 21a of the flocking areas 21 are located inwardly in the tire radial direction as compared to the tire radial direction outer ends 13a of the rigid bead fillers 13, the peel resistance can be improved. Further, keeping a given distance from the bead toes 23 outwardly in the tire radial direction can reduce the possibility of short fibers being caught by the rim/tire contact area, thereby reducing the possibility of short fibers 17 being peeled by being caught. Thus, peeling of the short fibers 17 starting from the tire radial direction inner ends 21a of the flocking areas 21 can be prevented. Accordingly, the peel resistance of the short fibers 17 fixed to the inner surface of the tire can be improved.

Peeling of the short fibers 17 with the adhesive is likely to begin at the tire radial direction inner ends 21a of the flocking areas 21, that is, the boundaries between the flocking areas 21 and the regions of the inner surface which are not subjected to flocking. Therefore, the tire 1 of this embodiment can suppress peeling of the short fibers 17 by locating the boundaries on more rigid and less deformable portions. Similarly, the tire 1 of this embodiment increases peel resistance by locating the tire radial direction inner ends 21a of the flocking areas 21 inwardly in the tire radial direction as compared to the tire radial direction outer ends 13a of the bead fillers 13. Further, for the same reason, the tire radial direction inner ends 21a of the flocking areas 21 are located inwardly in the tire radial direction as compared to the separating points d of the outer surface 16 from the rims R, thereby further improving the peel resistance. In other words, the boundaries between the flocking areas 21 and regions of the inner surface which are not subjected to flocking, are located on more rigid and less deformable portions. Thus, the peel resistance of the short fibers 17 fixed to the inner surface 15 of the tire 1 can be reliably improved.

Here, in terms of effectively reducing the cavity resonance occurring in the tire 1, the flocking areas 21 are preferably formed on portions occupying 25 % or more of the total surface area of the inner surface 15 of the tire 1. The short fibers are preferably fixed to the flocking areas 21 at an average density of 100 or more per one square centimeter.

Further, the short fibers 17 preferably use short fibers having a mean diameter D of 1 µm or more and 500 µm or less and a mean length L of 0.5 mm or more and 10 mm or less. Furthermore, the ratio of the mean length L to the mean diameter D of the short fibers 17 (L/D) is preferably 5 or more and 2000 or less. Specifically, while L of less than 0.5 mm or L/D of less than 5 would reduce the effect of lowering the cavity resonance, L exceeding 10 mm or L/D exceeding 2000 causes short fibers to tangle each other to form balls (clusters), which would make it impossible to achieve sufficient sound absorption performance of the short fibers. When D is less than 1 µm, multiple short fibers break in the production process to reduce productivity. On the other hand, D exceeding 500 µm increases rolling resistance due to increase in the tire weight, which would affect fuel efficiency of the vehicle fitted with such tires.

Further, the short fibers 17 can use organic synthetic fiber, inorganic fiber, recycled fiber, natural fiber, or the like. Examples of the organic synthetic fiber include fibers made of polyolefins such as polyethylene, polypropylene, and polybutylene; aliphatic polyamides such as nylon; aromatic polyamides such as Kevlar; polyesters such as polyethylene terephthalate, polyethylene naphthalate, polyethylene succinate, and polymethylmethacrylate; syndiotactic-1,2-polybutadiene; acrylonitrile-butadiene-styrene copolymers; polystyrenes; and copolymers thereof and the like. These organic synthetic fibers are suitably used in our tires, since they are generally inexpensive, chemically stable, and compatible with urethane-based adhesives. Further, as the above inorganic fiber, for example, carbon fiber, fiberglass, or the like can be used. As the above recycled fiber, for example, fibers made of rayon, cupra, or the like can be used. As the above natural fiber, for example, fibers made of cotton, silk, wool, or the like can be used.

A method of producing a pneumatic tire will be illustrated below. This production method is suitable, for example, for the production of the tire 1 described above.

The method of producing a pneumatic tire 1 includes an adhesive application step of applying an adhesive to the inner surface 15 of the tire 1, and a short fiber attachment step of attaching many short fibers 17 to portions of the inner surface 15 to which the adhesive is applied. In the adhesive application step, the adhesive is applied to at least part of the inner surface 15 of a vulcanized tire by spraying or using a brush or the like. After that, in the short fiber attachment step, many short fibers are attached to the portion of the inner surface 15 of the tire to which the adhesive is applied. The short fibers can be attached by various methods, for example, using electrostatic flocking. The electrostatic flocking process is a technique of electrically charging short fibers such that the short fibers are implanted by electrostatic force at right angles to the surface to which the fibers are to be attached. Using this technique, many short fibers can easily be arranged vertically on the inner surface of the tire.

If a masking member, for example, masking tape is applied prior to the adhesive application step, the desired region can exclusively be subjected to flocking more reliably. In the masking step, masking tape is placed on part of the inner surface of the vulcanized tire, to which the adhesive and the short fibers 17 are not to be attached. In the example of the above tire 1, pieces of the masking tape are provided in the ranges extending 10 mm from the bead toes 23 in the tire radial direction. The portions of the tire radial direction upper ends of the pieces of the provided masking tape correspond to the tire radial direction inner ends 21a of the flocking areas 21. The pieces of the masking tape are placed (attached) to extend from the tire radial direction inner ends 21a of the flocking areas 21 and to cover the outer surface 16 after being turned up around the bead toes 23. This can easily and more reliably prevent the adhesions of the adhesive and the short fibers 17. Specifically, the masking member may be placed to extend from the inner surface 15 to the outer surface 16 over the bead toes 23, thereby facilitating operations in the masking step and preventing the short fibers from being attached to the tire outer surface 16. Subsequently, the masking tape is peeled after the short fiber attachment step, thereby removing adhesive and the short fibers 17 attached to the outer surface of the masking tape. Thus, the short fibers 17 can be attached only to the desired portions.

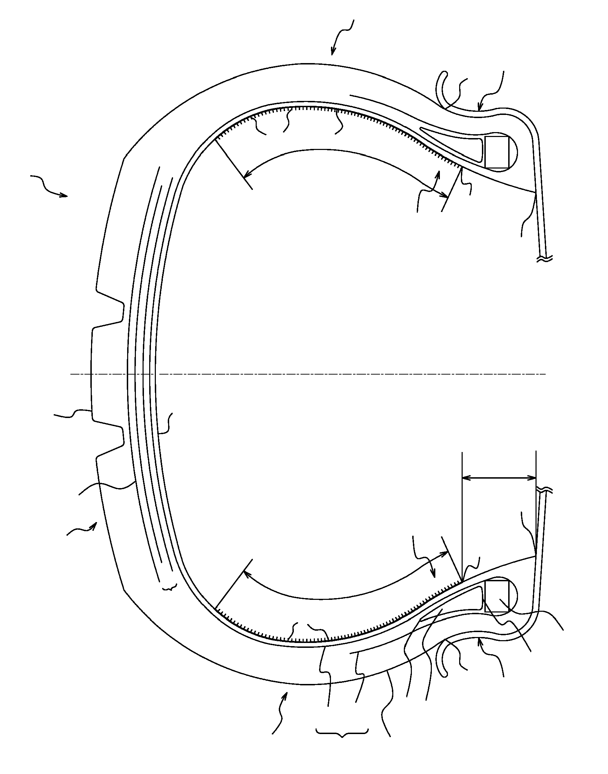

The above descriptions have been made with reference to the illustrated examples. However, the present invention is not limited to the embodiments described above, and it may be possible to make changes as appropriate within the scope of claims. For example, as shown in FIG. 3, the flocking areas 21 may be formed only on the inner surface of the sidewall portions 5 except for the vicinity of the tire equatorial plane E (the central area in the width direction). With this structure, for example, when the tread portion 7 of a tire is damaged to cause a flat tire, the repair can easily be carried out. Further, the flocking areas 21 may be formed in a plurality of regions separate from each other (for example, in a striped pattern). Consequently, even when the adhesive partially peels off from the inner surface 15 of the tire with the short fibers 17, the peeling of the adhesive hardly propagates, and the sound absorption performance can be prevented from being significantly reduced.

### EXAMPLES

Next, our tires were produced experimentally and the performance evaluations of peel resistance will be described below. For the tires of Comparative Examples 1 to 6 and Examples 1 to 12, nylon short fibers having a thickness of 20 denier (diameter: 50 µm) and a length of 4.0 mm were fixed to the inner surface of each tire with an adhesive to form flocking area(s).

### <Peel Resistance Evaluation>

The tires of Comparative Examples 1 to 6 and Examples 1 to 12 shown in Table 1 were each left in an environment at 60 °C in a no-load state for one month to age. After that, mounting and demounting of each tire on a rim were repeated 10 times, and driving of 10,000 km on a drum tester was performed with the maximum load (maximum mass which is allowed to be exerted on a tire) defined by JATMA being applied to the tire. Whether the flocking area(s) peeled off from the tire radial direction inner ends (21a) or not and the area of the peeled portion, if any, were determined. The results are shown in Table 1. Note that the flocking area [mm] in Table 1 represents the distance in the tire radial direction from the bead toes to the tire radial direction inner ends of the flocking area(s). For the tires of Comparative Examples 1, 3, and 5, the flocking area was formed all over the inner surface of the tire.

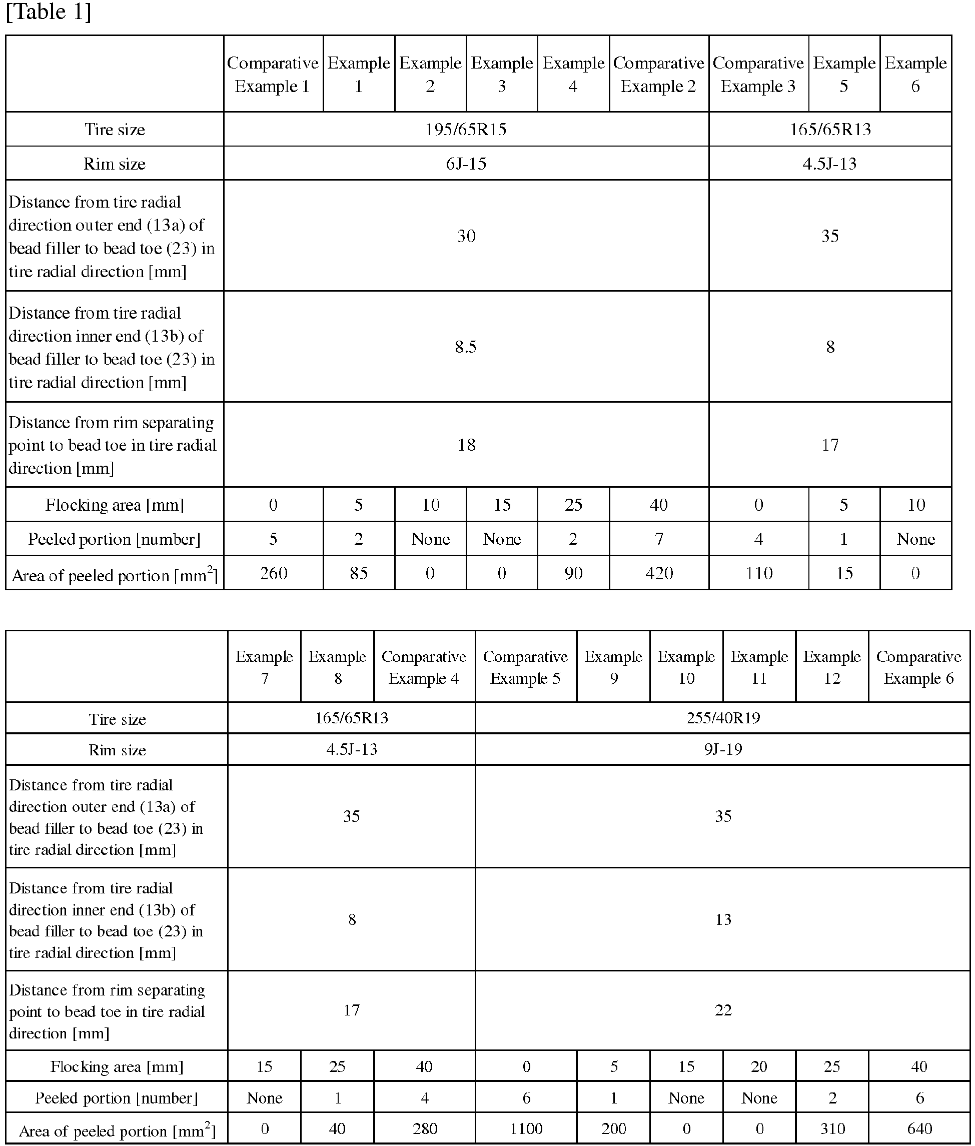

Results in Table 1 show that it is effective in terms of peel resistance of short fibers, irrespective of the tire size, to locate the tire radial direction inner ends of the flocking area(s) inwardly in the tire radial direction as compared to the tire radial direction outer ends of the bead fillers, and to locate the tire radial direction inner ends of the flocking area(s) on portions 10 mm apart from the bead toes outwardly in the tire radial direction. Further, it is found effective in terms of peel resistance of short fibers if the tire radial direction inner ends of the flocking area(s) are positioned inwardly in the tire radial direction as compared to rim separating points, and outwardly in the tire radial direction as compared to the tire radial direction inner ends of the bead fillers.

### <Cavity Resonance Reduction Performance Evaluation>

The performance of reducing cavity resonance was evaluated using tires (size: 195/65R15) of Comparative Example 1 and Example 2 shown in Table 1, and Comparative Example 7 also in Table 1 in which the inner surface was not subjected to flocking.

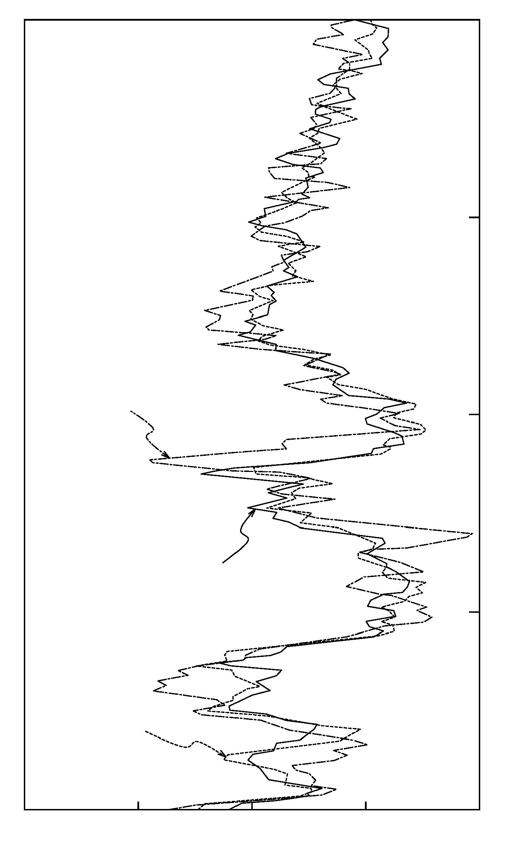

Each of the tires was mounted on a rim (6J-15) with a pressure which is 100 % of the predetermined pressure, and was fitted to a 2000 cc class automobile. Driving was performed with one passenger (being a driver) (load: about 450 kg) at a speed of 50 km/h on a rough asphalt road surface, and the vehicle interior sound was measured with a microphone installed at a driver's ear. The frequency spectra of the measurement results are shown in FIG. 2. As shown in FIG. 2, as compared with the tire of Comparative Example 7, the values of the peaks around 225 Hz and 235 Hz resulted from cavity resonance are smaller in the tires of Example 2 and Comparative Example 1, which shows the effect of reducing cavity resonance.

### INDUSTRIAL APPLICABILITY

Thus, we can provide a pneumatic tire with short fibers fixed to the inner surface of the tire with improved peel resistance, and a method of producing a pneumatic tire by which such a pneumatic tire can be obtained.

### REFERENCE SIGNS LIST

- 1: pneumatic tire
- 3: bead portion
- 5: sidewall portion
- 7: tread portion
- 9: carcass
- 11: bead core
- 13: bead filler
- 15: inner surface
- 16: outer surface
- 17: short fibers
- 21: flocking area
- 21a: tire radial direction inner end of flocking area
- 23: bead toe
- d: separating point

## Claims

1. A pneumatic tire having a carcass toroidally extending from a tread portion along a pair of sidewall portions to a pair of bead portions, and bead fillers provided on the tire radial direction outer side of bead cores embedded in the bead portions, comprising flocking areas in which many short fibers are fixed to at least part of an inner surface of the pneumatic tire with an adhesive,
wherein the flocking areas are positioned such that their tire radial direction inner ends are positioned inwardly in the tire radial direction as compared to the tire radial direction outer ends of the bead fillers and are spaced a given distance outward in the tire radial direction apart from bead toes.

2. The pneumatic tire according to claim 1, wherein the given distance is 10 mm or more.

3. The pneumatic tire according to claim 1 or claim 2, wherein the tire radial direction inner ends of the flocking areas are located inwardly in the tire radial direction as compared to separating points of an outer surface of the pneumatic tire from approved rims.

4. A method of producing a pneumatic tire, including an adhesive application step of applying an adhesive on at least part of an inner surface of the pneumatic tire, a short fiber attachment step of attaching many short fibers to the inner surface to which the adhesive is attached, and a masking step, prior to the adhesive application step, placing one or more masking members at least on portions of the inner surface, extending 10 mm outward in the tire radial direction from the bead toes.

5. The method of producing a pneumatic tire according to claim 4, wherein in the masking step, the one or more masking members are placed to extend from the inner surface to an outer surface of the pneumatic tire over the bead toes.

6. The method of producing a pneumatic tire according to claim 4 or claim 5, wherein in the short fiber attachment step, the many short fibers are attached by electrostatic flocking.
